# FASCICULE DE BREVET EUROPEEN

(11) **EP 3 319 863 B1**
(45) Date de publication et mention de la délivrance du brevet: **11.12.2019**
(21) Numéro de dépôt: 16748335.3
(22) Date de dépôt: 11.07.2016
(51) Int. Cl.: B62D 1/184, B62D 1/189, B62D 1/187

(54) **SYSTEME DE BLOCAGE EN MOUVEMENT RADIAL DE LA COLONNE DE DIRECTION**
SYSTEM ZUR BLOCKIERUNG DER RADIALBEWEGUNG DER LENKSÄULE
SYSTEM FOR BLOCKING RADIAL MOVEMENT OF THE STEERING COLUMN

(30) Priorité: 10.07.2015 FR 1556595
(43) Date de publication de la demande: 16.05.2018
(73) Titulaire: Robert Bosch Automotive Steering Vendôme, 41100 Vendome (FR)
(72) Inventeur: SAUQUET, Mickael, 41100 Villerable (FR); CHARVET, William, 37150 Civray en Touraine (FR); GENET, Nicolas, 41100 Coulommiers La Tour (FR)
(74) Mandataire: Novagraaf Technologies
(86) Numéro de dépôt international: PCT/FR2016/051778
(87) Numéro de publication internationale: WO 2017/009568

(56) Documents cités:
- EP-A2- 2 957 480
- EP-A2- 3 115 278
- WO-A1-2016/012788
- DE-A1-102012 104 055
- KR-A- 20150 043 835
- US-A1- 2009 019 963

## Description

La présente invention concerne une colonne de direction de véhicule réglable, plus particulièrement une colonne de direction réglable en rotation par rapport à une base de support fixée au châssis du véhicule.

La colonne de direction selon l'invention est destinée notamment mais non exclusivement à un véhicule automobile.

Les colonnes de direction transmettent la rotation du volant jusqu'aux roues pour modifier leur orientation, par exemple selon l'ordre suivant: le volant, la colonne de direction, l'axe intermédiaire, la crémaillère et enfin les roues.

Les colonnes de direction actuelles permettent un réglage en profondeur et/ou en hauteur du volant.

De manière classique, une colonne de direction comporte :
- un organe de direction destiné à être relié à un volant de véhicule,
- une base de support de cet organe,
- des moyens de serrage agencés pour pouvoir verrouiller l'organe de direction sur cette base de support.

Sur des colonnes de direction connues, le réglage en hauteur se fait par rotation de l'organe de direction autour d'un axe horizontal monté sur la base de support. On parle alors de réglage radial.

En raison de l'angle d'installation de la colonne de direction dans le véhicule et de la trajectoire de l'impact du conducteur sur le volant ou contre l'airbag, l'effort résultant sur la colonne de direction présente une composante verticale qui peut entrainer le mouvement du volant vers la position de réglage radial haute. Afin d'avoir un déploiement d'airbag optimum, il est nécessaire d'éviter ce mouvement vertical pendant le crash et il est donc nécessaire d'introduire un système de blocage du réglage vertical, en plus du serrage courant.

La solution connue la plus simple consiste à bloquer le mouvement vertical en assurant un niveau de friction suffisamment important de chaque côté du système de serrage. Les systèmes de friction présentent un niveau d'effort de résistance limité. La multiplication du nombre de surfaces de glissement ne permet d'atteindre les performances souhaitées qu'avec des systèmes encombrants, pouvant être bruyants et économiquement chers.

Aussi des solutions plus courantes ont été développées et consistent à rajouter un système avec des dents entre une pièce fixe et une pièce mobile en réglage vertical. Par exemple, les demandes de brevet DE102012104055A1, US2009/019963A1 et KR20150043835A divulguent une colonne de direction réglable selon le préambule de la revendication 1. Cependant même si ces systèmes à dents permettent de garantir des efforts de retenue élevés dans un encombrement réduit, ils nécessitent de nombreuses pièces supplémentaires, pour certaines plus complexes à fabriquer.

Le problème technique que vise à résoudre l'invention est donc de trouver un système de blocage du mouvement de l'organe de direction par rapport à son support sur le châssis du véhicule, garantissant des efforts élevés tout en étant plus facile à fabriquer.

A cet effet, un objet de l'invention est une colonne de direction comprenant :
- un organe de direction destiné à être relié à un volant de véhicule, notamment via un tube,
- une base de support, notamment une casquette, destinée à être montée fixe par rapport à un châssis de véhicule, l'organe de direction étant monté articulé en rotation à cette base de support,
- des moyens de serrage portés par l'organe de direction et comprenant un élément mobile de serrage, ces moyens de serrage étant agencés pour pouvoir verrouiller l'organe de direction sur la base de support par serrage de l'élément mobile contre la base de support.
Cette colonne de direction comprend :
- des deuxièmes formes de blocage portées par une plaque de tôle, cette dernière étant bloquée sur cette base de support,
- des premières formes de blocage portées par l'élément mobile de serrage.
la colonne de direction étant agencée de manière à ce que les premières formes de blocage soient aptes, lors du verrouillage de l'organe de direction sur la base de support par serrage de l'élément mobile contre la base de support, à venir s'engager entre les deuxièmes formes de blocage de manière à bloquer la rotation de l'organe de direction par rapport à la base de support.

Ainsi, outre le serrage qui permet de verrouiller l'organe de direction par rapport au châssis, cette colonne de direction selon l'invention comprend un mécanisme permettant de sécuriser le blocage de la rotation de l'organe de direction par rapport à sa base de support. En utilisant des formes de blocage solidaires d'une pièce mobile en réglage vertical, à savoir les premières formes de blocage solidaires de l'organe de direction, se logeant entre des formes de blocage solidaires d'une pièce fixe, à savoir les deuxièmes formes de blocage solidaires de la base de support, on obtient un serrage fort propre à un système de blocage à dents. Cependant, les premières formes de blocage sont portées par l'élément mobile assurant déjà le serrage pour le verrouillage. Par conséquent, cela permet à l'élément mobile d'assurer une double fonction de verrouillage par serrage dans un sens et de blocage par dent dans un autre sens. Cela fait une pièce de moins dans cette colonne de direction, qui est donc plus simple à réaliser.

De plus, la réalisation des deuxièmes formes de blocage sur une plaque de tôle permet une conception simple de ces formes de blocage. Par exemple, la plaque de tôle avec les formes de blocage peut être obtenue par découpage. Le découpage est plus simple à réaliser. Il permet également d'obtenir des formes plus précises qu'un emboutissage. En particulier cela permet d'obtenir facilement des rangées de dents sur cette plaque.

Par ailleurs, la plaque de tôle étant distincte de la base de support, la fabrication de ces deuxièmes formes de blocage peut être réalisée indépendamment de la fabrication de la base de support, ce qui permet d'éviter de complexifier la fabrication de cette base de support.

La base de support peut par exemple être formée par une tôle emboutie. Cette technique est plus appropriée pour une base de support formée d'une tôle, cette dernière présentant une certaine épaisseur.

La plaque de tôle est dite bloquée contre la base de support car elle ne glisse pas le long de celle-ci et reste toujours en contact avec elle. Par exemple, la plaque de tôle peut être fixée à la base de support, notamment par clipsage, soudage ou vissage. Selon un autre exemple, la plaque de tôle peut être bloquée sans fixation, par exemple en agençant la plaque de tôle toujours sous tension entre l'élément mobile et la paroi de la casquette contre laquelle elle est bloquée. Selon ce dernier exemple, la plaque de tôle peut comprendre des portions élastiques en appui contre la casquette et l'élément mobile, agencées pour être suffisamment sous contrainte, lorsque la colonne de direction est en position déverrouillée, de manière à maintenir la plaque de tôle bloquée.

Selon l'invention la plaque de tôle comprend un cadre unique avec une ouverture centrale, et lesdits moyens de serrage comprennent une vis de serrage passant à travers cette ouverture centrale; l'élément mobile de serrage et la plaque de tôle étant agencés de manière à ce que lors du serrage, l'élément mobile de serrage appuie directement contre la base de support.

L'invention peut optionnellement présenter une ou plusieurs des caractéristiques suivantes :
- les premières formes de blocage et les deuxièmes formes de blocage sont des dents ; c'est une forme simple de réalisation de formes de blocage pour permettre à l'élément mobile de s'engrener avec la plaque de tôle, et ainsi indirectement avec la base de support ; cela permet de plus un blocage dans les deux sens, et donc prévient tout mouvement de pivotement de l'organe de direction autour de l'axe pivot, soit, lorsque la colonne de direction est montée dans le véhicule, vers le haut ou vers le bas ;
- les dents ont leur champs agencés en vis-à-vis de la paroi de blocage ; cela permet de désengager les dents entre l'élément mobile de serrage et la plaque de tôle avec un déplacement de l'élément mobile de serrage correspondant à l'épaisseur des dents ; ainsi ce déplacement est plus faible que lorsque les dents sont perpendiculaires à la paroi de blocage (en effet avec des dents perpendiculaires, il faut un déplacement plus important qui correspond à la hauteur des dents); de plus avec des dents de champs, il est possible d'augmenter la hauteur de ces dents sans affecter l'amplitude du déplacement pour le serrage, ces dents présentant ainsi une meilleure résistance ;
- la colonne de direction peut être agencée ainsi :
   o les dents portées par la plaque de tôle pointent vers l'extérieur de la plaque de tôle, notamment les dents sont agencées sur un ou des bords de la plaque de tôle, et/ou
   o les dents portées par l'élément mobile de serrage pointent vers un plan médian de cet élément mobile de serrage ;
   cela permet aux dents de la came de venir de part et d'autre de la plaque de tôle et d'assurer un meilleur blocage ;
   - la plaque de tôle comprend deux rangées de dents ; dans ce cas les dents de chaque rangée pointent dans une direction s'écartant de l'autre rangée, puisque elles pointent vers l'extérieur ;
   - l'élément mobile de serrage comprend deux rangées de dents ; les dents d'une rangée peuvent pointer vers les dents de l'autre rangée ;
   - la plaque de tôle est faite d'une tôle découpée, les deuxièmes formes de blocage étant obtenues par découpage ;
   - la plaque de tôle a subi un traitement thermique, notamment la plaque de tôle est en acier trempé ; on a ainsi une meilleure résistance de la plaque de tôle ; du fait que la plaque de tôle est une pièce distincte, on peut dans ce cas limiter ce traitement à la plaque de tôle avant fixation sur la base de support, diminuant ainsi le coût de traitement ;
   - la plaque de tôle est en acier inoxydable ; cet acier inoxydable peut comprendre plus de 10,5% de chrome, en pourcentage de masse de total de l'acier ;
   - les moyens de serrage comprennent une vis de serrage agencée pour pouvoir entrainer l'élément mobile de serrage dans une position de verrouillage dans laquelle l'élément mobile de serrage est serré contre ladite plaque de tôle et pour pouvoir écarter ledit élément mobile de serrage de ladite plaque de tôle vers une position de déverrouillage ; l'élément mobile peut être une came entrainée en déplacement longitudinal selon l'axe de la vis de serrage par actionnement d'une contre came portée par la vis de serrage ;
   - l'élément mobile de serrage est constitué d'un acier fritté ; cela permet d'éviter d'avoir à retoucher l'élément mobile de serrage à la sortie des outillages ayant permis de le former ; de plus l'élément mobile de serrage est ainsi plus résistant ;
   - l'élément mobile de serrage et les premières formes de blocage forment une seule pièce ;
   - l'élément mobile de serrage est une came ; notamment l'élément mobile comprend un premier côté orienté vers la plaque de tôle et portant les premières formes de blocage et un deuxième côté comprenant des rampes ; les moyens de serrage peuvent comprendre une vis de serrage et des chemins de came actionnables en rotation par la vis de serrage, les chemins de came et les rampes étant agencées de manière en ce que la rotation des chemins de came entraine la translation de la came ;
   - la base de support comprend une paroi de blocage sur laquelle la plaque de tôle est fixée, et en ce que la plaque de tôle comprend des portions élastiques à distance de ladite paroi de blocage et distinctes des deuxièmes formes de blocage, ces portions élastiques et l'élément mobile de serrage étant agencés de manière à ce que lorsque ce dernier se serre contre la plaque de tôle, il rapproche ces portions élastiques contre cette paroi de blocage, mettant ainsi ces portions élastiques sous contrainte élastique ; les portions élastiques vont ainsi permettre un écartement plus facile de l'élément mobile de la paroi de blocage, et donc un désengagement plus aisé des premières formes de blocage avec les deuxièmes formes de blocage ; ainsi le désengagement des dents est facilité lors du verrouillage ; selon cette option, la plaque de tôle forme elle-même un moyen élastique, qui est mis sous contrainte lors du verrouillage de l'organe de direction sur la base de support, et qui facilite le désengagement des premières formes de blocage et des deuxièmes formes de blocage lors du déverrouillage de l'organe de direction sur la base de support ;

   - la plaque de tôle comprend des lumières délimitant avec les bords de la plaque de tôle des bandes de métal formant lesdites portions élastiques ;
   - la base de support comprend une paroi de blocage sur laquelle la plaque de tôle est bloquée, et la plaque de tôle comprend au moins une portion formant une lame métallique qui porte tout ou partie des deuxièmes formes complémentaires, la lame métallique étant agencée de manière à ce que lorsque l'élément mobile de serrage est à distance de la plaque de tôle, la lame métallique est à distance de la paroi de blocage, de sorte que si lors du serrage les premières formes de blocage viennent appuyer sur les deuxièmes formes de blocage, cette lame métallique se rapproche vers la paroi de blocage, mettant ainsi cette lame métallique sous contrainte élastique ; ainsi même si lors du serrage, les premières formes de blocage viennent à être décalées, de sorte qu'elle ne se logent pas entre les premières formes de blocage, il y aura quand même une force exercée sur la face de fixation et l'organe de direction sera quand même maintenu serré à la base de support ; en cas de collision du véhicule, les premières formes de blocage se logeront rapidement entre les deuxièmes formes de blocage ;
   - la came comprend des coulisseaux agencés à l'intérieur de l'ouverture centrale de manière à pouvoir coulisser contre les bords de l'ouverture centrale ; cela permet un guidage de la came par rapport à la plaque de tôle lors du réglage de la colonne de direction ;
   - l'organe de direction est réglable en rotation autour d'un axe pivot et les bords de l'ouverture centrale peuvent présenter des bords légèrement courbés, notamment selon des courbures correspondant à un arc d'un cercle centré sur l'axe pivot et dans un plan perpendiculaire à cet axe pivot ;
   - la plaque de tôle comprend un cadre extérieur, le cadre avec l'ouverture centrale étant à l'intérieur de ce cadre extérieur et relié à ce dernier par des entretoises, les deuxièmes formes de blocage étant portées par le cadre avec l'ouverture centrale ou par le cadre extérieur ;
   - le cadre extérieur est agencé de manière à former des lames ressorts, les deuxièmes formes de blocage étant portées par le cadre avec l'ouverture centrale ; on a ainsi une manière simple de réaliser séparément les deuxièmes formes de blocage et les moyens aidant au désengagement des premières et des deuxièmes formes de blocage ;
   - les lames ressort peuvent être formées par des plis, des courbes ou des décrochements sur le cadre extérieur de manière à ce que certaines parties du cadre extérieur soient décalées par rapport à d'autres parties ; certaines parties du cadre extérieur sont ainsi agencées contre la paroi de blocage et d'autre écartées de celles-ci, lorsque la colonne de direction est déverrouillée ;
   - le cadre extérieur est agencé de manière à ce que lors du serrage de l'élément mobile contre la base de support, ce cadre extérieur est pris en étau entre l'élément mobile et la base de support ; c'est une manière de transférer l'effort de serrage à la base de support ;
   - la plaque de tôle comprend un unique cadre, à savoir le cadre avec l'ouverture centrale, les deuxièmes formes de blocage étant portées par cet unique cadre ; il s'agit d'une plaque de tôle très simple à réaliser ;
   - dans le cas de l'alinéa précédent, il est possible de réaliser l'élément mobile de serrage avec au moins un élément élastique comme décrit précédemment, pour participer à l'écartement de l'élément mobile de la paroi de blocage ;
   - l'élément mobile de serrage comprend des portions de contact en vis-à-vis de la base de support, ces portions de contact étant agencées de manière décalée vers la base de support par rapport aux premières formes de blocage portées par l'élément mobile de serrage, de manière à ce que, lors du verrouillage, ces portions de contact appuient directement contre la base de support ;
   - la base de support comprend une paroi de blocage sur laquelle la plaque de tôle est bloquée, la paroi de blocage comportant des plots agencés de part et d'autre de ce cadre central, préférentiellement de manière ajustée, de manière à bloquer la plaque de tôle, de manière à participer au blocage de la rotation de l'organe de direction par rapport à la base de support ; notamment les plots peuvent être agencés entre ledit cadre extérieur et ledit cadre central ; les plots peuvent être au nombre de quatre ;
   - dans le cas où la plaque de tôle comprend un cadre avec une ouverture centrale et un cadre extérieur, les plots peuvent être emboités entre le cadre avec l'ouverture centrale et le cadre extérieur ; cela permet un maintien ferme de la plaque de tôle et évite les efforts de torsion entre ces deux cadres ; alternativement les plots peuvent être réalisés de manière à ce qu'ils s'agencent à l'intérieur de l'ouverture centrale et contre les bords du cadre avec l'ouverture centrale ;
   - la base de support comprend une paroi de blocage sur laquelle la plaque de tôle est bloquée, de plus la plaque de tôle peut comprendre une forme de reprise d'effort, la plaque de tôle comprenant un arceau formant une lumière dans la plaque de tôle, cette forme de reprise d'effort étant agencée dans cette lumière de manière à ce que des bords opposés de cette forme de reprise d'effort soient en contact avec des bords correspondants de cette lumière ; cela permet de prévenir un mouvement de translation ou de rotation selon une direction allant d'un bord opposé à l'autre ;
   - la forme de reprise d'effort est une arche et en ce que la plaque de tôle comprend une barrette s'étendant depuis un bord de la lumière formée par l'arceau, cette barrette étant agencée pour venir se glisser en contrainte sous ladite arche ; cela permet de plaquer la plaque de tôle contre la paroi de blocage et d'absorber les vibrations ; on diminue le bruit lors de l'utilisation du véhicule équipé de cette colonne de direction ;
   - la base de support comprend une paroi de blocage sur laquelle la plaque de tôle est bloquée, de plus la plaque de tôle peut comprendre des moyens de prise élastiques, notamment en haut et en bas de la plaque de tôle, permettant d'enficher la plaque de tôle sur la paroi de blocage, notamment selon un mouvement vertical vers le haut ;
   - la base de support comprend deux parois de serrage agencées de part et d'autre de l'organe de direction, chacune de ces parois comprenant un trou oblong, les moyens de serrage comportant une vis de serrage passant au travers des trous oblongs, agencés de manière à ce que la vis de serrage puisse être mobile en rotation par rapport à la base de support et solidairement à l'organe de direction, lors de la rotation de ce dernier par rapport à la base de support, l'une de ces parois étant une paroi de blocage sur laquelle est fixée la plaque de tôle ; la plaque de tôle peut comprendre un trou central en vis-à-vis des trous oblongs, la vis de serrage traversant également ce trou central et étant mobile à l'intérieur de celui-ci lors du réglage de l'organe de direction.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue en perspective d'une colonne de direction selon l'invention ;
- la figure 2 est une vue éclatée de la figure 1;
- la figure 3a est une vue de côté de la figure 1;
- la figure 3b illustre la vue obtenue selon la section en plans décalés de la figure 3a, les plans décalés étant perpendiculaires à l'axe de la colonne de direction A et étant représentés en figure 3a par la ligne EE' ;
- la figure 4 est une vue en perspective d'une des faces de la plaque de tôle, cette face étant destinée à être en vis-à-vis de l'élément mobile ;
- la figure 5 est une vue en perspective de la plaque de tôle en figure 4, mais vue de l'autre côté ;
- la figure 6 est une vue en perspective de la base de support de la figure 1 ;
- la figure 7 est une vue en perspective de la base de support de la figure 6, sur laquelle est montée la plaque de tôle telle que vue en figure 4 ;
- la figure 8 est une vue en perspective de l'élément mobile de la colonne de direction en figure 1, vu du côté destiné à être en vis-à-vis de la plaque de tôle ;
- la figure 9 est une vue en perspective de l'élément mobile en figure 8, mais vu de l'autre côté ;
- la figure 10 est une vue de côté de la figure 6 mais avec la plaque de tôle fixée sur la base de support et l'élément mobile positionné en coopération avec la plaque de tôle ;
- les figures 11a à 11c représentent une section en plans décalés de la figure 10, les plans décalés étant perpendiculaires à l'axe de la colonne de direction A et étant représentés par la ligne CC' en figure 10, selon différentes positions de la colonne de direction ;
- les figures 12a à 12c représentent une section selon DD' en figure 10 selon différentes positions de la colonne de direction ;
- la figure 13 représente une partie d'une colonne de direction selon un deuxième mode de réalisation ;
- la figure 14 est une vue en perspective de la base de support selon un troisième mode de réalisation;
- les figures 15 et 16 sont des vues de détails d'une partie de la figure 14, respectivement selon une vue de face et selon une vue en coupe selon l'axe GG' ;
- la figure 17 est une vue de face de la plaque de tôle selon le troisième mode de réalisation selon l'invention;
- la figure 18 est une vue en coupe selon un plan transversal et contenant l'axe FF' de la figure 17 ;
- la figure 19 est une vue arrière de la plaque de tôle de la figure 17 ;
- la figure 20 est une vue en perspective de l'élément mobile de serrage selon le troisième mode de réalisation vue d'un côté opposé à la face destinée à être en vis-à-vis de la plaque de tôle de la figure 17 ;
- la figure 21 est une vue de l'élément mobile de la figure 20 vue de l'autre côté, à savoir du côté destiné à être en vis-à-vis de la plaque de tôle de la figure 17 ;
- la figure 22 est une vue en perspective de la base de support de la figure 14 sur laquelle est montée la plaque de tôle de la figure 17.

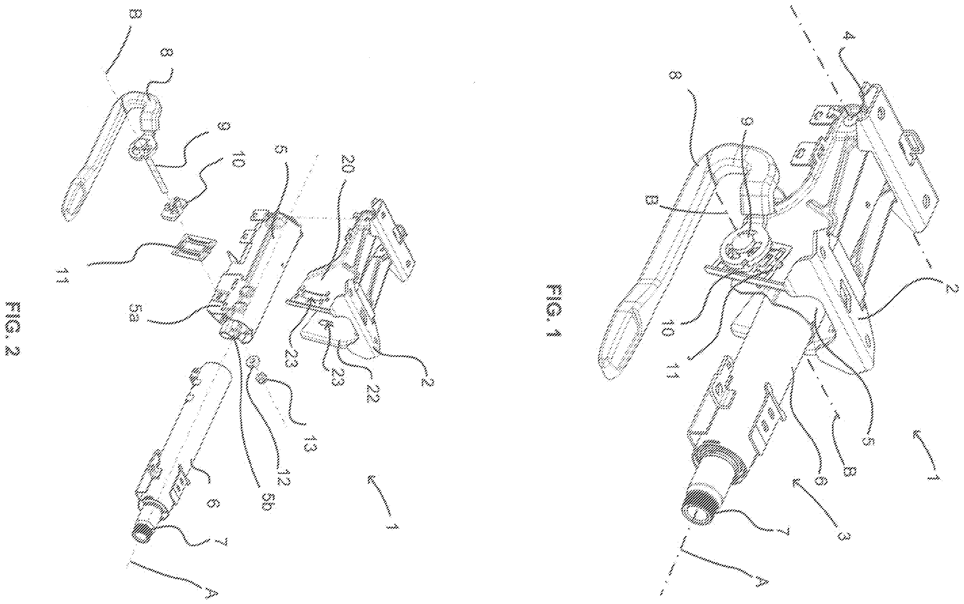

Les figures 1 et 2 illustrent une colonne de direction 1 pour un véhicule automobile selon l'invention, intégrant une casquette 2 formant une base de support pour un organe de direction 3.

L'organe de direction 3 comprend un tube, dit tube supérieur, relié à un embout volant 7, ce dernier étant destiné à être relié au volant de direction (non représenté) du véhicule. L'embout de volant 7 forme l'extrémité d'un arbre de direction libre en rotation autour d'un axe de rotation. Cette rotation permet de transmette les rotations du volant aux mécanismes de direction (non représentés) qui entrainent l'orientation des roues du véhicule. Cet axe de rotation est appelé axe de colonne de direction.

Le tube supérieur 6 est monté coulissant dans un corps inférieur 5 selon un axe de réglage axial, coaxial avec l'axe de colonne de direction. La référence A désigne dans les dessins indifféremment ces deux axes. Ce coulissement permet un premier réglage en profondeur du volant.

Le corps inférieur 5, est monté libre en rotation autour d'un axe pivot 4 porté par la casquette 2. Il s'agit d'un exemple de réalisation permettant l'articulation en rotation de l'organe de direction 3 sur la casquette 2. Cette rotation-ci permet un réglage radial du volant. L'axe pivot 4 est destiné à être horizontal lorsque la colonne de direction 1 est montée dans le véhicule.

Des moyens de serrage sont agencés pour permettre de serrer ensembles la casquette 2 et l'organe de direction 3, et en particulier, la casquette 2, le corps inférieur 5 et le tube supérieur 6. Cela permet de verrouiller l'ensemble en position fixe par rapport au châssis du véhicule, et donc de maintenir en position le volant lors de l'utilisation du véhicule. Ces moyens de serrage sont également agencés pour pouvoir se desserrer, la casquette 2 et l'organe de direction 3, et en particulier, la casquette 2, le corps inférieur 5 et le tube supérieur 6 n'étant alors plus serrés ensembles. On peut alors procéder aux réglages axial et/ou radial du volant.

Dans l'exemple de réalisation illustré, les moyens de serrage comprennent un levier 8 de serrage, une vis de serrage 9, un élément mobile 10, une butée à aiguille 12 et un écrou de serrage 13.

Comme on peut le voir sur la figure 2, la vis de serrage 9 comprend un axe longitudinal correspondant à la direction de serrage de l'élément mobile 10 contre la casquette 2 et donc de cette dernière et de l'organe de direction 3. Cet axe longitudinal est appelé ci-après axe de serrage B.

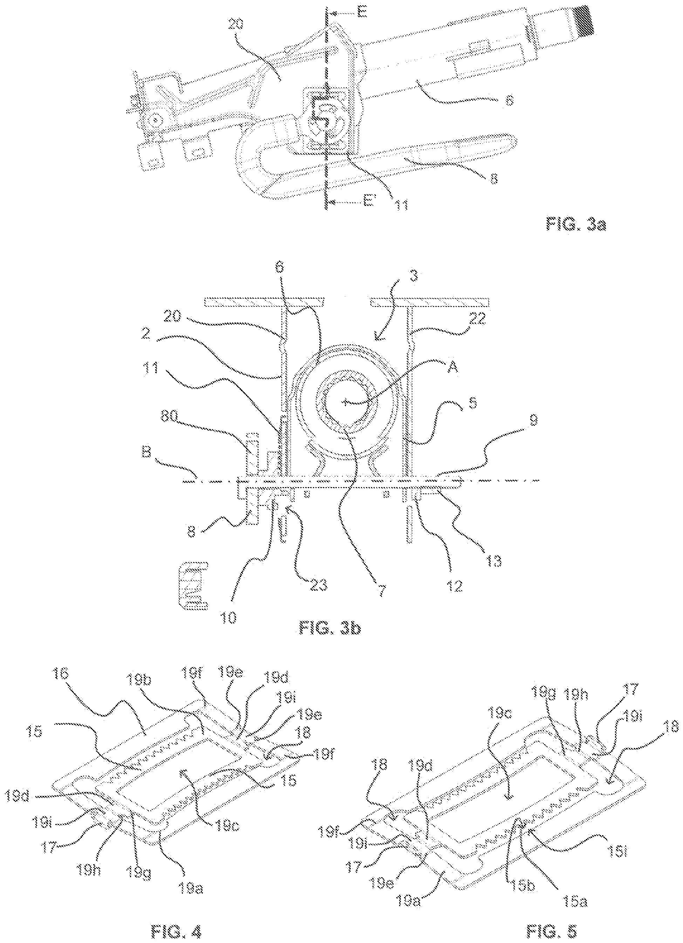

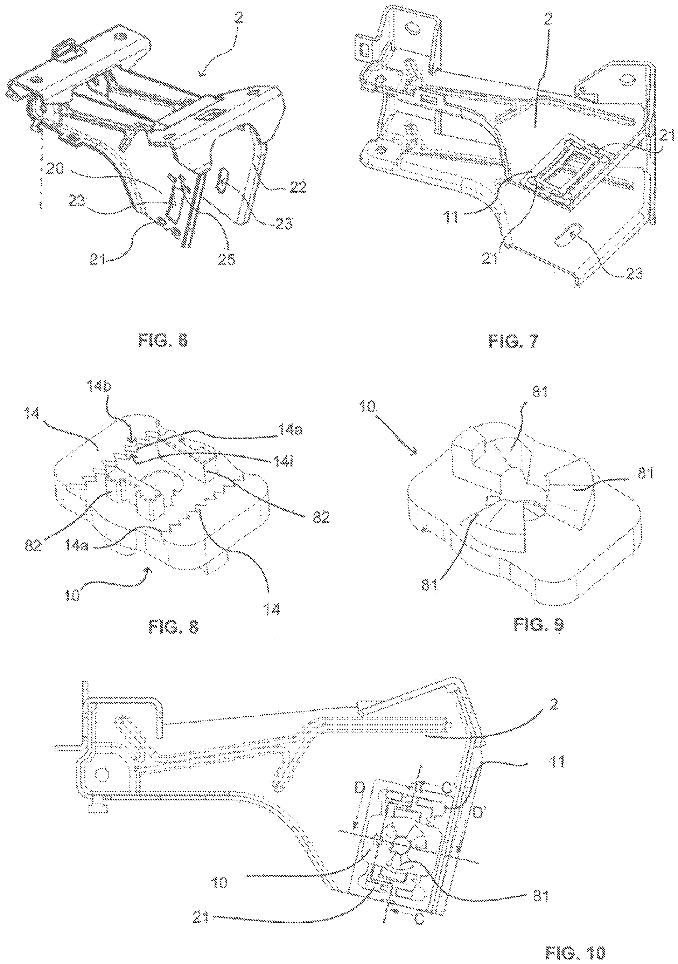

La figure 3b est une section plans décalés perpendiculaires à l'axe de colonne de direction A, lorsque le levier 8 est en position verrouillée. Comme illustré en figure 3a, ces plans suivent la ligne EE'. En descendant le long de cette ligne EE', de haut en bas, un premier plan passe par l'axe de serrage B, un deuxième plan passe par une rangée de dents de l'élément mobile 10, et enfin un troisième plan passe également par l'axe de serrage B. Ces dents sont visibles en figure 3b et de manière plus détaillée en figure 8.

La vis de serrage 9 est agencée au travers d'orifices de serrage du corps inférieur 5, dans lesquels elle est libre en rotation autour de l'axe de serrage B. Ainsi cette vis de serrage 9 est portée par l'organe de direction 3. Le corps inférieur 5 comprend deux flancs 5a, 5b, de part et d'autre et en contact du tube supérieur 6. Chacun de ces flancs est percé pour former l'un des orifices de serrage.

La casquette 2 comprend une première et une deuxième parois de serrage 20 et 22 agencées de part et d'autre du corps inférieur 5 et en vis-à-vis des flancs 5a et 5b de ce dernier. Chacune de ces parois de serrage 20, 22, comprend un trou de passage de vis 23. La vis de serrage 9 traverse également ces trous de passage de vis 23, qui sont agencés de manière à ce que la vis de serrage 9 puisse être mobile en rotation par rapport à la casquette 2 et solidairement au corps inférieur 5. Ces trous de passage de vis 23 peuvent avoir une forme arquée, avec des bords correspondant à des cercles centrés sur l'axe pivot 4. C'est le cas dans l'exemple illustré, où ces trous forment des trous oblongs 23. La vis de serrage 9 peut alors se déplacer le long de ces trous oblongs 23, notamment en conservant l'orientation de l'axe de serrage B, notamment une orientation horizontale.

Les extrémités de la vis de serrage 9 dépassent de part et d'autre de la casquette 2. A une première extrémité est fixé le levier 8, qui pourra donc entrainer la vis en rotation autour de l'axe de serrage B. Un écrou 13 est vissé sur la deuxième extrémité de la vis de serrage 9, et prend en étau avec la deuxième paroi de serrage 22 une butée 12, notamment une butée à aiguille. Cette butée 12 ayant un diamètre plus large que l'orifice de serrage de la deuxième paroi de serrage 22, elle forme une butée par rapport à un mouvement en translation de la vis de serrage 9 selon l'axe de serrage B.

Entre le levier 8 et la première paroi de serrage 20, l'élément mobile de serrage 10 est monté sur la vis de serrage 9. L'élément mobile de serrage 10 comprend un trou central au travers duquel passe la vis de réglage, de sorte que l'élément mobile peut coulisser le long de la vis de serrage 9 et au travers de ce trou central.

Selon l'exemple de réalisation illustré, et notamment les figures 2 et 9, l'élément mobile de serrage est une came 10 comprenant des rampes 81 coopérant avec des chemins de came (non représentés) fixes par rapport à la vis de serrage. Dans cet exemple, ces chemins de came sont portés par une extrémité 80 du levier 8 dans laquelle se fixe la première extrémité de la vis de réglage 9. Ainsi selon la rotation du levier 8 en verrouillage ou en déverrouillage, les chemins de came entrainent la came 10 en déplacement le long de la vis de réglage 9, respectivement vers ou en s'écartant de la première paroi de serrage 20.

L'actionnement en verrouillage du levier 8 repousse donc la came 10 venant en contact sur une plaque de tôle 11 fixée sur la première paroi de serrage 20, ci-après paroi de blocage 20. La came 10 appuie donc contre cette paroi de blocage 20. Ainsi, la came 10 et la butée 12 prennent en étau les parois de serrage 20, 22, de la casquette 2, qui prennent elles-mêmes en étau les flancs 5a et 5b du corps inférieur 5, qui eux-mêmes prennent en étau le tube supérieur 6. L'organe de direction 3 est ainsi bloqué selon une position donnée.

Lors de l'actionnement en déverrouillage du levier 8, les chemins de came n'exercent plus de poussée sur la came 10, la contrainte sur les parois de serrage 20, 22 et les flancs 3a, 3b diminue, et la came 10 s'écarte de la paroi de blocage. Un moyen élastique, notamment comme il sera décrit plus loin, permet de faciliter l'écartement de la came 10. De ce fait, le tube supérieur 6, le corps inférieur 5 et la casquette 2 ne sont plus serrés ensemble. Il est alors possible de régler le volant axialement ou radialement autour de l'axe pivot 4.

Alternativement, le mouvement de l'élément mobile de serrage 10 dans les deux sens le long de la vis de réglage peut être entrainé par un système à aiguille, à rouleau ou à bille, monté entre le levier et l'élément mobile et entrainé en rotation par le levier.

Le mouvement de serrage exerce une force suffisante pour maintenir l'organe de direction 3 en position lors de l'utilisation normale du véhicule. Par exemple, ce serrage permet de maintenir le volant bloqué malgré l'application d'une force verticale au niveau du volant de 200 à 1000 Newtons.

Cependant, en cas de collision du véhicule entrainant la projection du conducteur contre le volant, cette force sera insuffisante pour empêcher un mouvement en pivotement de l'organe de direction 3 autour de l'axe pivot 4.

La plaque de tôle 11 et l'élément mobile, notamment la came 10, sont agencés de manière à permettre un blocage supplémentaire et plus résistant, afin d'éviter tout mouvement de pivotement en cas de collision.

La plaque de tôle 11 est illustrée plus en détails aux figures 4 et 5. Cette plaque 11 comprend des découpes et pliages qui forment les différentes portions de cette plaque de tôle 11.

Dans cet exemple, la plaque de tôle comprend deux lumières 18 découpées dans cette plaque, et qui séparent cette dernière en deux cadres 19a et 19b reliés par des entretoises 19d formées d'une seule pièce avec ces cadres. Le premier cadre, forme un cadre extérieur 19a entourant le deuxième cadre, dit cadre central 19b.

Le cadre central 19b comprend une ouverture centrale 19c en vis-à-vis du trou oblong 23 de la paroi de blocage 20.

Le cadre central 19b présente deux montants entre lesquels la vis de réglage 9 peut glisser lors du pivotement de l'organe de direction 3 autour de l'axe pivot 4. Les bords de ces montants sont découpés de manière à former des dents 15a, chaque montant denté formant une crémaillère 15.

Chacune des crémaillères 15 forme donc une lame métallique.

Selon une réalisation de l'invention, et comme dans l'exemple illustré, les dents 15a étant formées dans la plaque de tôle 11, ces dents 15a pointent transversalement. Autrement dit, l'un des champs 15b de chaque dent 15 est en vis-à-vis de la paroi de blocage 20.

Selon une réalisation de l'invention, les entretoises 19d et le cadre extérieur 19a présentent un agencement, notamment des pliures ou des courbures, tel qu'une partie du cadre extérieur 19a et le cadre central 19b sont décalés par rapport à au moins une portion donnée du cadre extérieur selon l'axe de serrage B, lorsque la colonne de direction 1 est en position de déverrouillage. Cette portion donnée est de préférence montée en contact avec la paroi de blocage 20 et est dénommée ci-après portion d'appui 19i.

Selon une réalisation de l'invention, le cadre extérieur 19a présente des plis 19e et 19f, de même que le cadre central 19b présente des plis 19g et 19h. Ces plis sont agencés de manière à permettre le décalage décrit au paragraphe précédent.

Le cadre extérieur 19a peut présenter, comme illustré, deux portions d'appui 19i, qui sont directement jointes aux entretoises 19d.

Ces dernières comprennent par exemple deux plis 19g et 19h permettant le décalage du cadre central 19b par rapport aux deux portions d'appui 19i.

Le cadre extérieur 19a comprend des montants latéraux 16. Ce cadre extérieur 19a peut également, comme dans cet exemple, présenter deux plis 19e et 19f entre ces montants latéraux 16 et les portions d'appui 19i, soit huit plis 19e, 19f, dans cet exemple. Ces plis permettant le décalage des montants latéraux 16 par rapport aux deux portions d'appui 19i. Ce décalage confère à la plaque de tôle des propriétés élastiques en formant deux lames ressorts, correspondant aux portions du cadre extérieur 19a situées de part et d'autre des entretoises 19i.

Le décalage, et par exemple les plis, peuvent être agencés de manière à ce que lorsque la colonne de direction 1 est en position de déverrouillage et selon l'axe de serrage B, les montants latéraux 16 du cadre extérieur 19a sont plus proches de la came 10, la portion d'appui 19i est plus proche de la paroi de blocage 20, et le cadre central 19b est entre les montants latéraux 16 et la portion d'appui 19i . Ainsi en figure 5, où l'on voit le côté de la plaque de tôle 11 destiné à être en vis-à-vis de la paroi de blocage 20, les portions d'appui 19i sont en avant du cadre central 19b, et le cadre extérieur 19a est en arrière du cadre central 19b.

Comme illustré en figures 6, la paroi de blocage 20 de la casquette 2 comprend des trous de fixation 25, notamment un au-dessus du trou oblong 23 et un en dessous. La plaque de tôle 11 comprend deux pattes de fixation 17 fixées par emboitement élastique, ou clipsage, dans ces trous de fixation 25, comme on peut le voir en figure 7. La vis de réglage 9 passe donc au travers de cette ouverture centrale 19c et des trous oblongs 23 une fois la colonne de direction 1 assemblée, comme en figure 1.

Comme on peut le voir en figures 4 et 5, l'ouverture centrale 19c peut présenter des bords légèrement courbés. Ces courbures peuvent correspondre à un arc d'un cercle centré sur l'axe pivot 4 et perpendiculaire à cet axe pivot 4. L'ouverture 19c peut ainsi avoir une largeur proche du diamètre de la vis de serrage 9, tout en permettant à la vis de serrage 9 de se déplacer à l'intérieur de cette ouverture centrale 19c lors du réglage vertical du volant, notamment en conservant l'orientation de l'axe de serrage B.

Cette paroi de blocage 20 peut également comprendre au moins un plot 21 entre le cadre central 19b et le cadre extérieur 19a. Lorsqu'il y a plusieurs plots 21, ceux-ci peuvent être agencés de part et d'autre du cadre central 19b. Ce ou ces plots 21 servent de butées au cadre central, et donc aux crémaillères 15. Selon un exemple de réalisation plus efficace pour servir de butée au cadre central 19b, ces plots 21 sont répartis autour du cadre central 19b. Par exemple, ces plots 21 sont au nombre de 4, notamment deux au-dessus et deux au-dessous de ce cadre central. L'agencement de ce ou ces plots participe au blocage du cadre central 19b, ce blocage empêchant l'organe de direction 3 de tourner autour de l'axe pivot 4.

Ces plots 21 peuvent être réalisés de différentes manières : forme emboutie ou pliée, forme semi découpée dans la tôle, ou bien par des éléments rapportés et fixés sur la casquette 2.

Dans l'exemple illustré en figures 8 et 9, la came 10 comprend une face portant les rampes 81 et une face opposée comprenant deux interfaces dentées 14, formant chacune une rangée de dents 14a. Les champs 14b des dents 14a peuvent être en vis-à-vis de la plaque de tôle. Chacune de ces interfaces dentées 14 est agencée pour pouvoir s'imbriquer avec les crémaillères 15 de la plaque de tôle 11.

Dans l'exemple illustré, les pointes des dents 14a de l'une des interfaces dentées 14 sont tournées vers les pointes des dents 14a de l'autre des interfaces dentées 14. La distance entre les deux interfaces dentées 14 est agencée de manière à ce que le cadre central 19b puisse se loger entre les interfaces dentées 14, les dents 14a de l'interface dentées se logeant entre les dents 15a des crémaillères 15.

La face de la came portant les interfaces dentées 14 peut également porter des projections s'étendant depuis ces faces et formant des coulisseaux 82, notamment de part et d'autre du trou central dans lequel passe la vis de réglage 9.

Ces coulisseaux 82 sont agencés avec une largeur leur permettant de coulisser entre les bords de l'ouverture centrale 19c de la plaque de tôle 11, une fois la came 10 montée contre la plaque de tôle 11, comme on peut le voir en figure 10. Ainsi lors du réglage, ces coulisseaux 82 ne gêneront pas le mouvement de la vis de réglage 9 lors du réglage radiale du volant. De plus comme ces coulisseaux 82 sont, en prenant pour référence la face de la came 10 qui les porte, plus hauts que les interfaces dentées 14, ils sont aptes à coulisser dans l'ouverture centrale 19c de la plaque de tôle 11, permettant le guidage de l'élément mobile 10 selon l'axe de serrage B. Ceci facilite l'engrènement des interfaces dentées 14 et des crémaillères 15.

Le fonctionnement de la colonne de direction selon ce premier mode de réalisation va maintenant être détaillé.

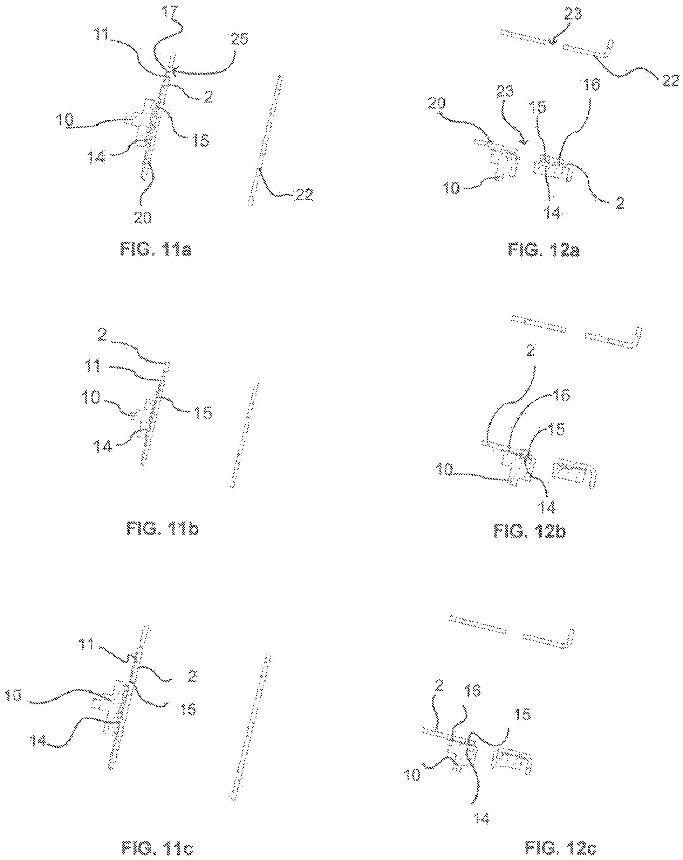

Les figures 11a à 11c sont des sections en plans décalés perpendiculaires à l'axe de colonne de direction, selon différentes positions du levier de serrage. Comme illustré en figure 10, ces plans suivent la ligne CC'. En descendant le long de cette ligne CC', de haut en bas, un premier plan passe par l'axe de serrage B, un deuxième plan passe par une rangée de dents de l'élément mobile 10, et enfin un troisième plan passe également par l'axe de serrage B.

A l'état déverrouillé illustré en figure 11a et 12a, les dents 14a de la came 10 sont décalées vers le levier 8 par rapport aux dents 15a de la crémaillère 15. Ainsi les dents des crémaillères 15 et des interfaces dentées 14 sont désengagées. De plus, les moyens de serrage ne serrent plus ensembles l'organe de direction 3 et la casquette 2. L'ajustement vertical du volant est donc possible.

Du fait des plis 19g et 19h, les crémaillères 15 sont à distance de la paroi de blocage 20.

Une fois le réglage effectué, le verrouillage des moyens de serrage par l'intermédiaire du levier 8 permet de fixer le volant dans une position choisie par le conducteur. Ainsi, lors de l'utilisation courante du véhicule, les moyens de serrage sont verrouillés avec une tension importante dans la vis de serrage 9 et tous les composants des moyens de serrage sont en contact. Dans l'exemple illustré, les interfaces dentées 14 viennent pousser les montants latéraux 16 contre la paroi de blocage 20. L'effort de serrage est ainsi transmis aux parois de la casquette 2, qui viennent serrer le corps inférieur 5.

Cette manœuvre de verrouillage permet également de rengrener la came 10 dans la plaque de tôle 11, comme illustré en figures 11b et 12b. Les interfaces dentées 14 de la came 10 sont donc engrenées dans les crémaillères 15 de la plaque de tôle 11.

Les dents 14a de l'interface dentée 14 et les dents 15a de la crémaillère 15 forment des premières et deuxièmes formes de blocage, empêchant grâce à leur agencement et à cet engrènement la rotation autour de l'axe de pivot 4 de l'organe de direction 3.

En effet lors d'une collision, avec sollicitation vers le bas du volant, l'effort radial transmis depuis le volant tend à faire pivoter le corps inférieur 5 autour de l'axe pivot 4. Ce corps inférieur 5 entraine la vis de serrage 9 qui entraine la came 10. Cette dernière est alors bloquée par la plaque de tôle 11, grâce à l'engrènement des dents 14a et 15a. La plaque de tôle 11 est elle-même bloquée par la casquette 2, à laquelle elle est fixée, la casquette étant fixée sur le châssis.

Les plots 21 participent à cet effort de blocage. Cela soulage également l'effort sur les pattes de fixation 17.

Par exemple, une colonne de direction 1 selon l'invention, grâce à cette plaque de tôle 11 peut résister à un effort supérieur à celui de l'effort de serrage. Par exemple, la plaque de tôle 11 permet de maintenir le volant bloqué malgré l'application d'une force verticale au niveau du volant de 5000 newtons.

Lors du verrouillage, il est possible que les dents des interfaces dentées 14 et celles des crémaillères 15 soient décalées et au lieu de s'engrener viennent s'appuyer champs contre champs, selon une position dite position dent sur dent, illustrée en figures 11c et 12c. De ce fait comme on peut le voir plus précisément en figure 11c, les dents 14a de la came 10 poussent les crémaillères 15, qui se rapprochent alors de la paroi de blocage 20. Les interfaces dentées 14 viennent également pousser les montants latéraux 16 contre la paroi de blocage 20. L'effort de serrage est ainsi transmis aux parois de la casquette 2, qui vient serrer le corps inférieur 5. La colonne de direction 1 selon l'invention est donc verrouillée, même dans une position dent sur dent.

De plus, le rapprochement des crémaillères 15 de la paroi de blocage 20, diminue le décalage entre celles-ci et les portions d'appui 19i. Il s'ensuit une déformation élastique des entretoises 19d. De part cette déformation élastique l'impact est très faible sur l'effort ressenti au levier 8.

Lors d'une collision du véhicule, l'effort radial entraîne le glissement de la came 10 sur la plaque 11 jusqu'à ce que les dents s'engrènent grâce à la raideur de la tôle formant la plaque de tôle 11. Dans cet exemple, la déformation élastique met l'ensemble formé par les entretoises 19d et les crémaillères 15 en contrainte ; de ce fait l'ensemble formé par les entretoises 19d et les crémaillères exerce une force de rappel favorisant l'engrènement des dents 14a et 15a. La colonne de direction 1 revient dans la configuration illustrée en figures 11b et 12b, avec blocage du mouvement radial du volant.

Selon une réalisation de l'invention, les dents 14a de chaque interface dentée 14 sont séparées par des interstices 14i et présentent une largeur plus faible que la largeur de ces interstices. De même, les dents 15a de chaque crémaillère 15 sont séparées par des interstices 15i et présentent une largeur plus faible que la largeur de ces interstices. Cela permet un léger jeu entre les dents 14a des interfaces dentées 14 et les dents 15a des crémaillères 15, lors de l'engrènement de ces interfaces dentées 14 et de ces crémaillères 15. L'engrènement des dents est ainsi facilité en particulier en cas de collision, lorsque la came 10 et la plaque de tôle 11 passent d'une position dent sur dent à une position engrenée.

En utilisation normale, pour procéder à un nouveau réglage, l'actionnement du levier 8 dans le sens de déverrouillage permet de supprimer la tension dans la vis de réglage 9, de libérer la came 10 qui se déplace selon l'axe de serrage B vers le levier de serrage 8. Ce déplacement peut être provoqué ou facilité par des moyens élastiques de désengagement agencés pour repousser la came 10. Ce mouvement permet donc de désengrener les dents des interfaces dentées 14 et des crémaillères 15.

Selon le premier mode de réalisation, ces moyens élastiques sont des lames ressorts en périphérie de la plaque de tôle 11 et portées par cette dernière. Comme dans cet exemple, ces lames ressorts sont formées par le cadre extérieur, en particulier grâce aux plis entre les montants latéraux 16 et la portion d'appui 19i. Cette élasticité est conférée par la raideur de la tôle formant la plaque de tôle 11 et du fait que, comme expliqué précédemment, le cadre extérieur 19a est décalé par rapport à la portion d'appui 19i. Plus ce décalage diminue et plus la contrainte élastique augmente.

Ce décalage s'observe plus particulièrement sur la figue 12a, où l'on observe ces montants latéraux 16 plus décalés selon l'axe de serrage B vers la came 10 que les crémaillères 15. Lors du verrouillage, la came 10 entre en contact d'abord avec ces montants latéraux 16 et les met sous contrainte élastique.

Ce décalage se réduit ensuite. Il peut aller jusqu'à s'annuler comme en position dent sur dent (figure 12c) et s'inverser en position d'engrènement des dents (figure 12b). Cette mise sous contrainte permettra ultérieurement le désengagement de la came 10.

Selon une réalisation de l'invention, à l'état déverrouillé, la plaque de tôle 11 peut être montée en précontrainte, de manière à ce que les montants latéraux 16 soient en contact avec les interfaces dentées 14, comme on peut le voir en figure 12a. Cette contrainte augmente ensuite lors du verrouillage.

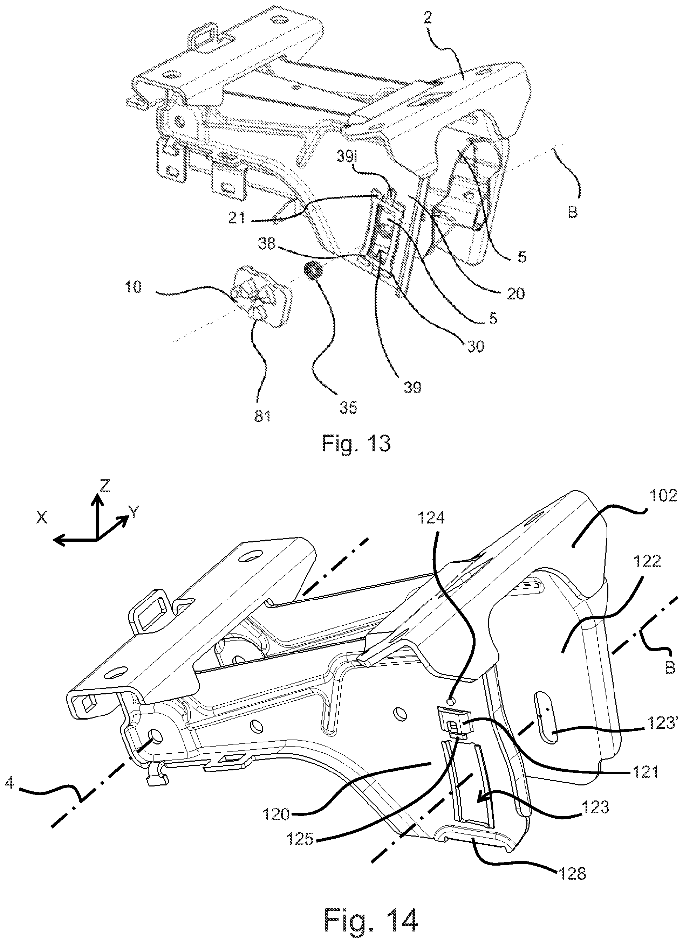

Selon un deuxième mode de réalisation illustré en figure 13, la colonne de direction diffère par la plaque de tôle 30 utilisée et par les moyens élastiques de désengagement.

Cette plaque de tôle 30 ne comprend qu'un seul cadre 38 avec une ouverture centrale 39. Ce cadre 38 peut présenter les mêmes caractéristiques que le cadre central 19b de la plaque de tôle 11 du premier mode de réalisation. Il coopère de la même manière avec la came 10, qui peut présenter les mêmes caractéristiques que dans le premier mode de réalisation, hormis la présence de portions de contact décrites ci-après.

De même, la même casquette 2 du premier mode de réalisation peut être utilisée. Notamment, la cadre unique 38 peut se loger entre les plots 21.

Les moyens élastiques de désengagement sont eux formés par au moins un ressort 35, qui est monté entre le corps inférieur 5 et la came 10, qui repousse cette came 10 et qui la désengrène de la plaque de tôle 30 lors du déverrouillage.

Il est possible de n'avoir qu'un ressort 35 comme dans l'exemple illustré. Le ressort 35 peut par exemple être un ressort à spires enfilé sur la vis de serrage 9, en contact d'un côté avec la came 10 et de l'autre avec le corps inférieur 5, en passant au travers de l'ouverture centrale 39 du cadre 38 et du trou oblong 23 de la paroi de blocage 20.

Il est également possible d'agencer deux ressorts de part et d'autre de la vis de réglage 9. Ces ressorts peuvent également être à spires.

Dans cet exemple, les crémaillères 15 sont découpées dans l'épaisseur de la tôle de la plaque, et présentent également deux plis situés tous deux entre le cadre 38 et une zone d'appui 39i destinée à s'appuyer sur la paroi de blocage 20. Cette épaisseur et ces plis confèrent au cadre 38 des propriétés de ressort. Cela permet comme dans le premier mode de réalisation d'exercer une force de rappel favorisant l'engrènement des dents de la plaque de tôle 30 et des dents de la came 10, en cas de choc alors que la colonne de direction était en position dent sur dent. Cela permet également de réduire au maximum la course nécessaire au désengrènement de la came 10.

A noter que dans ce deuxième mode de réalisation, les interfaces dentées diffèrent des interfaces dentées 14 représentées en figure 8 en ce qu'elles comprennent des portions de contact (non représentées) en vis-à-vis de la paroi de blocage 20. Ces portions de contact sont agencées de manière décalée vers la paroi de blocage 20 par rapport aux dents 14a de la came 10, de manière à ce que, lors du verrouillage, ces portions de contact appuient directement contre la paroi de blocage 20, transférant ainsi l'effort de serrage à la paroi de blocage 20.

Dans le premier mode de réalisation, la crémaillère verticale 11 intègre sans pièce additionnelle la fonction de désengrènement de la came 10.

Le deuxième mode de réalisation permet de diminuer l'encombrement du système de blocage en cas de collision grâce à un ensemble de crémaillères de surface réduite.

Les figures 14 à 22 illustrent un troisième mode de réalisation. Sur les figures 14, 15 et 16 seule la casquette 102 a été représentée. Dans ce troisième mode de réalisation, la casquette 102 se différencie de la casquette 2 du deuxième mode de réalisation par la zone sur laquelle la plaque de tôle est destinée à être reçue et également se différencie par cette plaque de tôle elle-même.

Ci-après, sauf précision contraire, les termes dessus, dessous, longitudinal, transversal, vertical, inférieur et supérieur sont définis par rapport à l'orientation qu'est destinée à prendre la colonne de direction une fois montée dans le véhicule. Les axes longitudinal (X), transversal (Y) et vertical (Z) peuvent donc correspondre à ceux d'un véhicule destiné à recevoir la colonne de direction.

Cette casquette 102 comprend donc, comme celle du deuxième mode de réalisation, des parois de serrage 120 et 122 venant se serrer de part et d'autre du corps inférieur, non représenté, pour bloquer celui-ci ou le débloquer pour permettre la rotation du corps inférieur et du tube autour de l'axe pivot 4 de la colonne de direction.

Le corps inférieur, le tube et la vis de serrage peuvent être identiques à ceux du deuxième mode de réalisation. Seul l'axe de serrage B est représenté en figure 14.

Les parois de serrage 120, 122 comprennent de la même manière un premier et un deuxième trous oblongs, 123 et 123', présentant une forme arquée centrée sur l'axe pivot 4, pour recevoir la vis de serrage et permettre le déplacement de celle-ci le long de ces trous oblongs 123, 123', lors du réglage de la hauteur de la colonne de direction.

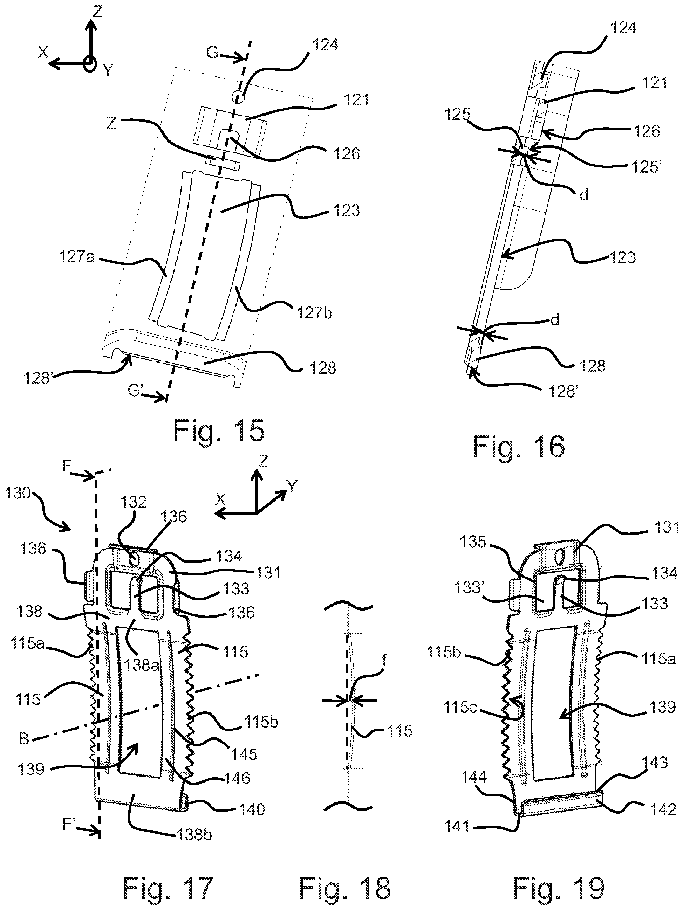

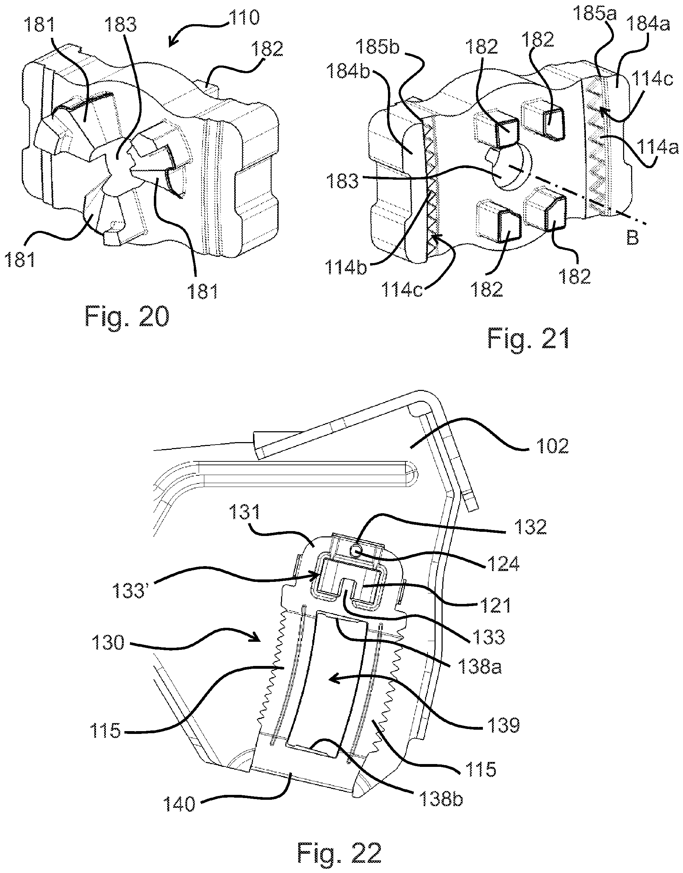

Comme on peut le voir en figure 22, l'une des parois de serrage, ici du côté du levier de serrage (non représenté en figures 14 et 22), forme la paroi de blocage 120 qui reçoit la plaque de tôle 130, illustrée isolément en figures 17 à 19 (non représentée en figure 14, 15 et 16).

Cette paroi de blocage 120 diffère de celle des autres modes de réalisation par des moyens formés sur celle-ci de manière à permettre la fixation de la plaque de tôle 130, à savoir :
- un bord inférieur de la paroi de blocage 120 présentant une portion d'insertion 128,
- une arche 121 agencée de l'autre côté du premier trou oblong 123, soit au-dessus de ce dernier, et s'étendant transversalement et vers l'extérieur de la casquette 102,
- un pion 124, ici circulaire, au-dessus de l'arche 121.

La plaque de tôle 130 est agencée pour pouvoir se glisser depuis le bas et le long de la paroi de blocage 120 et venir s'enficher dans celle-ci en différents points, comme cela sera expliqué plus loin à l'appui d'exemples de réalisation.

Selon ce troisième mode de réalisation, sur les bords du premier trou oblong 123 peuvent être formées des marches 127a, 127b, s'étendant globalement verticalement.

Ici, ces marches 127a, 127b s'étendent le long du premier trou oblong 123. Ici, ces marches sont donc arquées, leurs bords les plus longs pouvant être définis par des cercles centrés sur l'axe pivot 4.

Entre l'arche 121 et le premier trou oblong 123, peut être agencée une protubérance 125, qui ici a la forme d'une barre transversale par rapport à l'axe de serrage B. Elle peut notamment être obtenue par emboutissage.

La portion d'insertion 128 peut également être emboutie pour former un épaulement entre cette portion d'insertion 128 et le reste de la paroi de blocage 120.

Comme dans le deuxième mode de réalisation, la plaque de tôle 130 comprend un cadre unique 138 formé par des montants inférieur 138b et supérieur 138a reliés par des crémaillères 115 autour d'une ouverture centrale 139.

La plaque de tôle 130 comprend un arceau 131 agencé au-dessus du montant supérieur 138a, s'étendant globalement dans un même plan et adjacent à ce dernier. Cet arceau 131 définit donc, entre ses bords et le montant supérieur 138a, une lumière 133'.

La plaque de tôle 130 comprend également une barrette 133, majoritairement agencée dans le plan global de cette plaque de tôle et s'étendant depuis le montant supérieur 138a vers le haut. Cette barrette 133 peut, comme ici, présenter une extrémité distale 134 à l'opposé du montant supérieur 138a et repliée légèrement vers la paroi de blocage 120, lorsque la plaque de tôle 130 est montée contre cette paroi de blocage 120.

Le montant inférieur 138b du cadre unique 138 comprend un bord recourbé 140, par exemple un bord replié, notamment en trois plis de sorte qu'il forme une portion verticale 144, une portion horizontale 141, une deuxième portion verticale 142, ainsi qu'une portion terminale oblique 143 s'écartant de la plaque de tôle 130.

L'arceau 131 peut, comme illustré, comporter en son sommet un trou d'indexation longitudinale 132, oblong dans cet exemple.

Lors du montage de la plaque de tôle 130 sur la paroi de blocage 120, on positionne la plaque de tôle 130 avec l'extrémité distale 134 de la barrette 133 au-dessus de la protubérance 125, puis on glisse la plaque en la remontant vers le haut le long de la paroi de blocage 120.

La portion d'insertion 128 glisse alors contre la portion terminale oblique 143, puis s'enfiche dans le bord recourbé 140, jusqu'à venir en contact avec la portion horizontale 141 de ce dernier.

Dans le même temps, l'extrémité distale 134 passe sous l'arche 121, entrainant une portion de la barrette 133 sous cette arche 121. L'arche 121 vient ainsi se loger dans la lumière 133' de l'arceau 131. Le trou d'indexation longitudinal 132 se loge alors autour du pion 124.

La figure 22 représente la plaque de tôle 130 une fois montée sur la paroi de blocage 120.

Pour faciliter le passage de la barrette 133 sous l'arche 121, ce dernier peut comprendre une échancrure 126 s'étendant au sommet de cette arche 121 et s'ouvrant vers le bas.

Comme dans les modes de réalisation précédents, les dents 115a et 115b de la crémaillère peuvent, comme illustré, présenter des champs 115c tournés en direction de la paroi de blocage 120, soit transversalement par rapport à l'axe de serrage B. Les dents 115a, 115b de chaque crémaillère 115 pointent dans une direction opposée à l'autre des crémaillères 115, autrement dit, elles pointent vers l'extérieur de la plaque de tôle 130.

Ces crémaillères 115 forment grâce à l'agencement de la plaque de tôle 130, des éléments ressorts participant à une force de rappel en cas d'engrènement dents-sur-dents avec la came 110 illustrée en figures 20 et 21.

Un exemple de réalisation permettant la flexion des crémaillères 115 vers la paroi de blocage 120, et donc leur permettant de jouer le rôle de deux lames ressorts, est décrit ci-après.

La protubérance 125 et l'épaulement 129 sont agencés de manière à ce que la protubérance 125 et la portion d'insertion 128 présentent des surfaces d'appui décalées par rapport au reste de la paroi de blocage 120, selon une direction parallèle à l'axe de serrage B et en s'écartant de la paroi de blocage 120. Par exemple, ce décalage d, d', peut être pour la protubérance 125 et/ou la portion d'insertion 128 de 1mm.

Une fois la plaque de tôle 130 montée sur la paroi de blocage 120, le montant supérieur 138a du cadre unique 138 est plaqué contre la surface d'appui 125' de la protubérance 125, et le montant inférieur 138b de ce cadre est plaqué contre la surface d'appui 128' de la portion d'insertion 128.

Ainsi les crémaillères 115, lorsque la colonne est desserrée, sont à distance de la paroi de blocage 120.

En cas de blocage dents-sur-dents, les dents 114a et 114b de la came 110 poussent les dents 115a, 115b des crémaillères et donc ces dernières vers la paroi de blocage 120. Cette flexion permet de générer une force de rappel des crémaillères 115 vers la came 110 et donc le rengrènement en cas de choc.

Selon une variante non représentée, il est possible de laisser les crémaillères 115 fléchir complètement jusqu'à la paroi de blocage 120.

Selon le troisième mode de réalisation, notamment tel qu'illustré, les marches 127a et 127b sont agencées pour limiter la flexion au milieu des crémaillères 115. On limite ainsi le débattement des crémaillères 115, diminuant ainsi le risque de désengrènement des dents en cas de choc.

Par exemple, les marches 127a et 127b de la paroi de blocage 120 peuvent être décalées transversalement de 0,7 mm, soit vers l'observateur des figures 14 et 15.

La plaque de tôle 130 peut avoir une épaisseur comprise entre 0,5 et 1 mm, par exemple de 0,6 mm.

Pour augmenter la raideur de la plaque de tôle 130, cette dernière peut comprendre des nervures 145, situées de part et d'autre de l'ouverture centrale 139 selon une direction longitudinale.

Par exemple, lorsque la plaque de tôle 130 est montée sur la casquette 120, les marches 127a et 127b peuvent être logées sur une surface d'accueil 146 située entre les bords latéraux de l'ouverture centrale 139 et les nervures 145.

La figure 18 illustre une coupe selon l'axe FF' dans la figure 17, permettant de voir la crémaillère 115 de profil. Celle-ci est légèrement bombée, Comme on peut le voir en figure 18, où est représenté un écart f entre la ligne droite théorique (en pointillés en figure 18) et la forme réelle de la crémaillère, lorsqu'elle ne subit pas de contrainte. Cet écart f permet de décaler légèrement la crémaillère 115 en direction de la came 110.

La plaque de tôle une fois fabriquée peut présenter de légers défauts. De plus, au montage la plaque peut se courber légèrement. Si dans un tel cas la plaque est bombée en direction de la paroi de blocage, les dents 114a, 114b de la came 110 peuvent s'engrener de façon partielle avec les dents 115a, 115b de la crémaillère correspondante 115.

L'écart f résultant de la forme bombée permet d'assurer une tolérance entre la ligne droite théorique et cette forme bombée. Même si en raison de sa fabrication ou du montage, la crémaillère 115 est rapprochée de la paroi de blocage 120, elle ne devient pas bombée dans l'autre sens, ce qui diminue les risques de mauvais engrènement.

Afin de renforcer la fixation de la plaque de tôle 130, chacun des montants de l'arceau 131 peut présenter des ailes de renforcement 136, ici formées par des bords repliés de la plaque de tôle 130. Ces bords sont repliés transversalement et en s'écartant de la paroi de blocage 120. L'arceau 131 est ainsi plus résistant.

Également, comme on peut l'observer sur ces figures, l'arceau 131 peut être embouti au niveau des bords de sa lumière 133', de manière à le renforcer davantage.

Selon ce mode de réalisation, comme illustré ici, l'arche 121 peut présenter une largeur sensiblement égale à celle de la lumière 133' de l'arceau 131. Ainsi, en cas de choc, une reprise d'effort en rotation vers le haut ou vers le bas est assurée entre les bords supérieur et inférieur de l'arche 121 et l'arceau 131, notamment ses bords au niveau de la lumière 133'.

Une reprise d'effort en rotation vers le haut est également réalisée entre la portion horizontale 141 du bord recourbé 140 et la portion d'insertion 128.

Le pion circulaire 124 permet par exemple un indexage latéral longitudinal en coopération avec le trou d'indexage longitudinal 132, ce dernier ayant une largeur sensiblement égale au diamètre du pion 124, avec néanmoins un jeu permettant le logement de l'un dans l'autre.

Le trou d'indexage 132 peut être oblong avec sa longueur agencée verticalement pour permettre une tolérance de fabrication. L'indexage vertical peut alors se faire par la portion horizontale 141 du bord recourbé 140.

La came 110, visible aux figures 20 et 21, peut être identique à celle du troisième mode de réalisation.

Elle comporte un trou traversant 183 destiné à être traversé par la vis de serrage. La came 110 est agencée de manière à ce que les champs 114c de ses dents 114a et 114b soient orientées vers la paroi de blocage 120, donc vers la plaque de tôle 130.

L'écart entre les rangées de dents 114a et 114b est agencé de manière à ce que celles-ci puissent venir de part et d'autre de la plaque de tôle 130, pour s'engrener longitudinalement avec les dents 115a, 115b de cette dernière.

À l'opposé de la face destinée à être en vis-à-vis de la paroi de blocage 120, la came 110 comprend des chemins de came 181, qui coopèrent avec les cames entraînées par le levier pour rapprocher ou écarter la came 110 de la paroi de blocage 120.

Comme dans le deuxième mode de réalisation, un ou deux ressorts peuvent être agencés entre la came 110 et la paroi de blocage 120 ou entre la came et le corps inférieur, de manière à écarter la came 110 lorsqu'on desserre la colonne de direction.

La came 110 peut également comprendre des coulisseaux 182 répartis autour du trou traversant 183 pour le passage de la vis et agencés de manière à pouvoir coulisser contre les bords de l'ouverture centrale 139 de la plaque de tôle 130. Cela permet un guidage de la came 110 lors du déplacement de la vis de serrage au travers de l'ouverture centrale 139. On améliore ainsi la mise en engrènement de la came 110 et de la plaque de tôle 130, une fois le réglage effectué.

Les coulisseaux 182 peuvent présenter des faces externes verticales, à savoir les faces en vis-à-vis des dents 114a, 114b de la came 110. Ces faces sont arquées de la même manière que les bords de l'ouverture centrale 139 contre lesquels ces faces coulissent. Cela améliore le guidage.

Comme pour le deuxième mode de réalisation, cette came 110 comprend des portions de contact 184a, 184b, agencées de part et d'autre des rangées de dents 114a et 114b de la came 110.

Comme dans le deuxième mode de réalisation, ces portions de contact 184a, 184b, sont :
- en vis-à-vis de la paroi de blocage 120, et
- décalées par rapport aux dents 114a, 114b de la came 110 en direction de la paroi de blocage 120,
de manière à ce que, lors du verrouillage, ces portions de contact 184a et 184b appuient directement contre la paroi de blocage 120, transférant ainsi l'effort de serrage à la paroi de blocage 120, y compris en cas de position dents-sur-dents.

Pour cela, la came 110 peut comprendre des épaulements 185a, 185b.

Selon l'invention, et notamment dans cet exemple, les crémaillères 115 peuvent se loger dans un espace formé entre ces portions de contact 184a, 184b et la vis de serrage.

D'une manière générale, l'agencement de champs des dents de la plaque de tôle 11, 30, 130, permettant un déplacement réduit comparé à des dents perpendiculaires à la paroi de blocage 20, 120, cet agencement permet également d'avoir des chemins de came 81, 181, avec une hauteur, prise de leur base vers le levier selon la direction de l'axe de serrage B, plus réduite qu'avec des dents perpendiculaires à la paroi de blocage 20, 120. De ce fait, cela permet avec des dents de champs d'améliorer l'efficacité du système de serrage. De plus, l'utilisateur ressent un verrouillage plus net lorsqu'il actionne le levier en verrouillage.

D'autres variantes de réalisation non illustrées, notamment applicables aux deux modes de réalisation, peuvent également être envisagées et parmi lesquelles :
- la colonne de direction peut comprendre deux plaques de tôle implantées de chaque côté de la colonne de direction, sur chaque paroi de serrage 20, 22 ;
- au lieu de plots 21, la casquette peut comprendre des trous et la crémaillère peut comprendre des formes complémentaires venant à l'intérieur ces trous ;
- les dents de la crémaillère verticale peuvent être parallèles à l'axe de serrage B ;
- les dents de la plaque de tôle peuvent être en périphérie de la plaque de tôle et les lames ressorts de dégagement de la came au milieu de la plaque de tôle ; par exemple ce sont les montants du cadre extérieur qui portent les crémaillères et le cadre central qui porte les lames ressort.

## Revendications

1. Colonne de direction (1) comprenant :
- un organe de direction (3) destiné à être relié à un volant de véhicule,
- une base de support (2 ; 102), destinée à être montée fixe par rapport à un châssis de véhicule, ledit organe de direction étant monté articulé en rotation à ladite base de support,
- des moyens de serrage portés par l'organe de direction et comprenant un élément mobile de serrage (10 ; 110), lesdits moyens de serrage étant agencés pour pouvoir verrouiller l'organe de direction sur ladite base de support par serrage de l'élément mobile contre la base de support,
la colonne de direction en comprenant:
- des premières formes de blocage (14a ; 114a, 114b) portées par ledit élément mobile de serrage,
- des deuxièmes formes de blocage (15a ; 115a, 115b) portées par une plaque de tôle (30 ; 130), cette dernière étant bloquée contre ladite base de support,
ladite colonne de direction étant agencée de manière à ce que les premières formes de blocage soient aptes, lors du verrouillage de l'organe de direction sur ladite base de support par serrage de l'élément mobile contre la base de support, à venir s'engager entre les deuxièmes formes de blocage de manière à bloquer la rotation de l'organe de direction par rapport à la base de support, la plaque de tôle (30 ; 130) comprenant un cadre unique (38 ; 138) avec une ouverture centrale (39 ; 139), et **caractérisée en ce que** lesdits moyens de serrage comprennent une vis de serrage (9) passant à travers cette ouverture centrale, l'élément mobile de serrage (10 ; 110) et la plaque de tôle (30 ; 130) étant agencés de manière à ce que lors du serrage, l'élément mobile de serrage appuie directement contre la base de support (2 ; 102) .

2. Colonne de direction (1) selon la revendication 1, **caractérisée en ce que** les premières formes de blocage (14a ; 114a, 114b) et les deuxièmes formes de blocage (15a ; 115a, 115b) sont des dents.

3. Colonne de direction (1) selon la revendication 2, **caractérisée en ce que** les dents (14a, 15a ; 114a, 114b, 115a, 115b) ont leur champs (14b, 15b ; 114c, 115c) agencés en vis-à-vis d'une paroi de blocage (20 ; 120).

4. Colonne de direction (1) selon la revendication 3, **caractérisée en ce que** :
- les dents (15a ; 115a, 115b) portées par la plaque de tôle (30 ; 130) pointent vers l'extérieur de la plaque de tôle, et/ou
- les dents (14a ; 114a, 114b) portées par l'élément mobile de serrage (30 ; 130) pointent vers un plan médian de cet élément mobile de serrage.

5. Colonne de direction (1) selon l'une quelconque des revendications 1 à 4, **caractérisée en ce que** la plaque de tôle (11 ; 30 ; 130) est faite d'une tôle découpée, les deuxièmes formes de blocage (15 ; 115a, 115b) étant obtenues par découpage.

6. Colonne de direction (1) selon l'une des revendications précédentes, **caractérisée en ce que** lesdits moyens de serrage comprennent une vis de serrage (9) agencée pour pouvoir entrainer ledit élément mobile de serrage (10 ; 110) dans une position de verrouillage dans laquelle l'élément mobile de serrage est serré contre ladite plaque de tôle (30 ; 130) et pour pouvoir écarter ledit élément mobile de serrage de ladite plaque de tôle vers une position de déverrouillage.

7. Colonne de direction (1) selon l'une des revendications précédentes, **caractérisée en ce que** ladite base de support (2) comprend une paroi de blocage (20) contre laquelle la plaque de tôle est bloquée, et **en ce que** la plaque de tôle (11) comprend des portions élastiques à distance de ladite paroi de blocage et distinctes des deuxièmes formes de blocage, ces portions élastiques et l'élément mobile de serrage (10) étant agencés de manière à ce que lorsque ce dernier se serre contre la plaque de tôle, il rapproche ces portions élastiques contre cette paroi de blocage (20), mettant ainsi ces portions élastiques sous contrainte élastique.

8. Colonne de direction (1) selon la revendication 7, **caractérisée en ce que** la plaque de tôle comprend des lumières délimitant avec les bords de la plaque de tôle des bandes de métal formant lesdites portions élastiques.

9. Colonne de direction (1) selon l'une des revendications précédentes, **caractérisée en ce que** ladite base de support (2) comprend une paroi de blocage (20 ; 120) contre laquelle la plaque de tôle (11 ; 130) est bloquée, et **en ce que** la plaque de tôle comprend au moins une portion formant une lame métallique (15 ; 115) qui porte tout ou partie des deuxièmes formes complémentaires (15a ; 115a, 115b), la lame métallique étant agencée de manière à ce que lorsque l'élément mobile de serrage (10 ; 110) est à distance de la plaque de tôle, la lame métallique est à distance de la paroi de blocage, de sorte que si lors du serrage les premières formes de blocage (14a ; 114a, 114b) viennent appuyer sur les deuxièmes formes de blocage (15a ; 115a, 115b), cette lame métallique (15 ; 115) se rapproche vers la paroi de blocage (20 ; 120), mettant ainsi cette lame métallique sous contrainte élastique.

10. Colonne de direction (1) selon l'une des revendications précédentes, **caractérisée en ce que** ladite base de support (2) comprend une paroi de blocage (20) sur laquelle la plaque de tôle (30) est bloquée, ladite paroi de blocage comportant des plots (21) agencés de part et d'autre de ce cadre, de manière à bloquer la plaque de tôle, de manière à participer au blocage de la rotation de l'organe de direction (3) par rapport à la base de support (2).

11. Colonne de direction (1) selon l'une des revendications précédentes, ladite base de support (102) comprenant une paroi de blocage (120) sur laquelle la plaque de tôle (130) est bloquée, **caractérisée en ce que** la plaque de tôle comprend une forme de reprise d'effort (121), la plaque de tôle comprenant un arceau (131) formant une lumière (133') dans la plaque de tôle, cette forme de reprise d'effort étant agencée dans cette lumière (133') de manière à ce que des bords opposés de cette forme de reprise d'effort soient en contact avec des bords correspondants de cette lumière.

12. Colonne de direction (1) selon la revendication précédente, **caractérisée en ce que** la forme de reprise d'effort est une arche (121) et **en ce que** la plaque de tôle (130) comprend une barrette (133) s'étendant depuis un bord de la lumière (133') formée par l'arceau (131), cette barrette étant agencée pour venir se glisser en contrainte sous ladite arche (121).

13. Colonne de direction (1) selon l'une des revendications précédentes, **caractérisée en ce que** l'élément mobile de serrage (110) comprend des portions de contact (184a, 184b) agencées de part et d'autre des rangées de premières formes de blocage (114a et 114b) et en vis-à-vis de la base de support (102), ces portions de contact (184a, 184b) étant agencées de manière décalée vers la base de support par rapport aux premières formes de blocage (114a, 114b) portées par l'élément mobile de serrage, de manière à ce que, lors du verrouillage, ces portions de contact appuient directement contre la base de support.

## Patentansprüche

1. Lenksäule (1), welche umfasst:
- ein Lenkorgan (3), das dazu bestimmt ist, mit einem Fahrzeuglenkrad verbunden zu werden,
- einen Stützfuß (2; 102), der dazu bestimmt ist, fest in Bezug auf ein Fahrgestell des Fahrzeugs angebracht zu werden, wobei das Lenkorgan drehbar an dem Stützfuß angelenkt ist,
- Spannmittel, die von dem Lenkorgan getragen werden und ein bewegliches Spannelement (10; 110) umfassen, wobei die Spannmittel so ausgebildet sind, dass sie das Lenkorgan durch Verspannen des beweglichen Elements gegen den Stützfuß auf dem Stützfuß verriegeln können,
wobei die Lenksäule umfasst:
- erste Blockierformen (14a; 114a, 114b), die von dem beweglichen Spannelement getragen werden,
- zweite Blockierformen (15a; 115a, 115b), die von einer Blechplatte (30; 130) getragen werden, wobei diese Letztere an dem Stützfuß arretiert ist,
wobei die Lenksäule derart ausgebildet ist, dass die ersten Blockierformen geeignet sind, bei der Verriegelung des Lenkorgans auf dem Stützfuß durch Verspannen des beweglichen Elements gegen den Stützfuß zwischen die zweiten Blockierformen einzugreifen, um so die Drehung des Lenkorgans in Bezug auf den Stützfuß zu blockieren, wobei die Blechplatte (30; 130) einen einzigen Rahmen (38; 138) mit einer zentralen Öffnung (39; 139) umfasst,
und
**dadurch gekennzeichnet ist, dass** die Spannmittel eine Spannschraube (9) umfassen, die durch diese zentrale Öffnung durchgeschraubt wird, wobei das bewegliche Spannelement (10; 110) und die Blechplatte (30; 130) derart ausgebildet sind, dass beim Spannen das bewegliche Spannelement direkt gegen den Stützfuß (2; 102) drückt.

2. Lenksäule (1) nach Anspruch 1, **dadurch gekennzeichnet, dass** die ersten Blockierformen (14a; 114a, 114b) und die zweiten Blockierformen (15a; 115a, 115b) Zähne sind.

3. Lenksäule (1) nach Anspruch 2, **dadurch gekennzeichnet, dass** die Zähne (14a, 15a; 114a, 114b, 115a, 115b) ihre Felder (14b, 15b; 114c, 115c) aufweisen, die gegenüber einer Blockierwand (20; 120) angeordnet sind.

4. Lenksäule (1) nach Anspruch 3, **dadurch gekennzeichnet, dass**:
- die Zähne (15a; 115a, 115b), die von der Blechplatte (30; 130) getragen werden, zur Außenseite der Blechplatte zeigen, und/oder
- die Zähne (14a; 114a, 114b), die von dem beweglichen Spannelement (30; 130) getragen werden, zu einer Mittelebene dieses beweglichen Spannelements zeigen.

5. Lenksäule (1) nach einem der Ansprüche 1 bis 4, **dadurch gekennzeichnet, dass** die Blechplatte (11; 30; 130) aus einem gestanzten Blech hergestellt ist, wobei die zweiten Blockierformen (15a; 115a, 115b) durch Schneiden erhalten werden.

6. Lenksäule (1) nach einem der vorhergehenden Ansprüche, **dadurch gekennzeichnet, dass** die Spannmittel eine Spannschraube (9) umfassen, die dafür ausgebildet ist, das bewegliche Spannelement (10; 110) in eine Verriegelungsposition mitnehmen zu können, in welcher das bewegliche Spannelement gegen die Blechplatte (30; 130) verspannt wird, und das bewegliche Spannelement von der Blechplatte in eine Entriegelungsposition entfernen zu können.

7. Lenksäule (1) nach einem der vorhergehenden Ansprüche, **dadurch gekennzeichnet, dass** der Stützfuß (2) eine Blockierwand (20) umfasst, an welcher die Blechplatte arretiert ist, und dadurch, dass die Blechplatte (11) elastische Abschnitte umfasst, die von der Blockierwand entfernt und von den zweiten Blockierformen verschieden sind, wobei diese elastischen Abschnitte und das bewegliche Spannelement (10) derart ausgebildet sind, dass, wenn sich dieses Letztere gegen die Blechplatte verspannt, es diese elastischen Abschnitte an diese Blockierwand (20) annähert und somit diese elastischen Abschnitte unter elastische Spannung setzt.

8. Lenksäule (1) nach Anspruch 7, **dadurch gekennzeichnet, dass** die Blechplatte Öffnungen umfasst, die mit den Rändern der Blechplatte Metallbänder begrenzen, welche die elastischen Abschnitte bilden.

9. Lenksäule (1) nach einem der vorhergehenden Ansprüche, **dadurch gekennzeichnet, dass** der Stützfuß (2) eine Blockierwand (20; 120) umfasst, an welcher die Blechplatte (11; 130) arretiert ist, und dadurch, dass die Blechplatte wenigstens einen Abschnitt umfasst, der einen Metallstreifen (15; 115) bildet, welcher alle oder einen Teil der zweiten komplementären Formen (15a; 115, 115b) trägt, wobei der Metallstreifen derart ausgebildet ist, dass, wenn sich das bewegliche Spannelement (10; 110) in einem Abstand von der Blechplatte befindet, der Metallstreifen sich in einem Abstand von der Blockierwand befindet, so dass, wenn beim Verspannen die ersten Blockierformen (14a; 114a, 114b) beginnen, auf die zweiten Blockierformen (15a; 115, 115b) zu drücken, dieser Metallstreifen (15; 115) sich an die Blockierwand (20; 120) annähert und somit diesen Metallstreifen unter elastische Spannung setzt.

10. Lenksäule (1) nach einem der vorhergehenden Ansprüche, **dadurch gekennzeichnet, dass** der Stützfuß (2) eine Blockierwand (20) umfasst, an welcher die Blechplatte (30) arretiert ist, wobei die Blockierwand Vorsprünge (21) aufweist, die beiderseits dieses Rahmens angeordnet sind, um die Blechplatte zu arretieren, um zur Blockierung der Rotation des Lenkorgans (3) in Bezug auf den Stützfuß (2) beizutragen.

11. Lenksäule (1) nach einem der vorhergehenden Ansprüche, wobei der Stützfuß (102) eine Blockierwand (120) umfasst, an welcher die Blechplatte (130) arretiert ist, **dadurch gekennzeichnet, dass** die Blechplatte eine Kraftaufnahmeform (121) umfasst, wobei die Blechplatte einen Bügel (131) umfasst, der eine Öffnung (133') in der Blechplatte bildet, wobei diese Kraftaufnahmeform in dieser Öffnung (133') derart angeordnet ist, dass sich einander gegenüberliegende Ränder dieser Kraftaufnahmeform in Kontakt mit entsprechenden Rändern dieser Öffnung befinden.

12. Lenksäule (1) nach dem vorhergehenden Anspruch, **dadurch gekennzeichnet, dass** die Kraftaufnahmeform ein Bogen (121) ist, und dadurch, dass die Blechplatte (130) einen Steg (133) umfasst, der sich von einem Rand der von dem Bügel (131) gebildeten Öffnung (133') aus erstreckt, wobei dieser Steg dafür ausgebildet ist, in verspanntem Zustand unter den Bogen (121) zu gleiten.

13. Lenksäule (1) nach einem der vorhergehenden Ansprüche, **dadurch gekennzeichnet, dass** das bewegliche Spannelement (110) Kontaktabschnitte (184a, 184b) umfasst, die beiderseits der Reihen von ersten Blockierformen (114a und 114b) und gegenüber dem Stützfuß (102) angeordnet sind, wobei diese Kontaktabschnitte (184a, 184b) in Bezug auf die ersten Blockierformen (114a, 114b), die von dem beweglichen Spannelement getragen werden, zum Stützfuß hin versetzt angeordnet sind, so dass bei der Verriegelung diese Kontaktabschnitte direkt gegen den Stützfuß drücken.

## Claims

1. Steering column (1) comprising:
- a steering member (3) intended to be connected to a vehicle steering wheel,
- a support base (2; 102), intended to be mounted fixedly with respect to a vehicle chassis, the said steering member being mounted articulated in rotation to the said support base,
- clamping means borne by the steering member and comprising a mobile clamping element (10; 110), the said clamping means being arranged so as to be able to lock the steering member on the said support base by clamping of the mobile element against the support base,
the steering column comprising:
- first blocking shapes (14a; 114a, 114b) borne by the said mobile clamping element,
- second blocking shapes (15a; 115a, 115b) borne by a sheet-metal plate (30; 130), the latter being blocked against the said support base,
the said steering column being arranged in such a way that the first blocking shapes are able, during locking of the steering member on the said support base by clamping of the mobile element against the support base, to come and engage between the second blocking shapes so as to block the rotation of the steering member with respect to the support base,
the sheet-metal plate (30; 130) comprising a single frame (38; 138) with a central opening (39; 139), and
**characterized in that** said clamping means comprise a clamping screw (9) arranged through said central opening, the mobile clamping element (10; 110) and the sheet-metal plate (30; 130) being arranged in such a way that, during clamping, the mobile clamping element presses directly against the support base (2; 102) .

2. Steering column (1) according to Claim 1, **characterized in that** the first blocking shapes (14a; 114a, 114b) and the second blocking shapes (15a; 115a, 115b) are teeth.

3. Steering column (1) according to Claim 2, **characterized in that** the teeth (14a, 15a; 114a, 114b, 115a, 115b) have their end faces (14b, 15b; 114c, 115c) arranged facing the blocking wall (20; 120).

4. Steering column (1) according to Claim 3, **characterized in that**:
- the teeth (15a; 115a, 115b) borne by the sheet-metal plate (30; 130) point towards the outside of the sheet-metal plate, and/or
- the teeth (14a; 114a, 114b) borne by the mobile clamping element (30; 130) point towards a midplane of this mobile clamping element.

5. Steering column (1) according to any one of Claims 1 to 4, **characterized in that** the sheet-metal plate (11; 30; 130) is made of a cut metal sheet, the second blocking shapes (15; 115a, 115b) being obtained by cutting.

6. Steering column (1) according to one of the preceding claims, **characterized in that** the said clamping means comprise a clamping screw (9) arranged in such a way as to be able to drive the said mobile clamping element (10; 110) into a locking position in which the mobile clamping element is clamped against the said sheet-metal plate (30; 130) and to be able to move the said mobile clamping element away from the said sheet-metal plate towards an unlocking position.

7. Steering column (1) according to one of the preceding claims, **characterized in that** the said support base (2) comprises a blocking wall (20) against which the sheet-metal plate is blocked, and **in that** the sheet-metal plate (11) comprises elastic portions some distance away from the said blocking wall and distinct from the second blocking shapes , these elastic portions and the mobile clamping element (10) being arranged in such a way that when the latter is clamped against the sheet-metal plate, it moves these elastic portions against this blocking wall (20), thus placing these elastic portions under elastic strain.

8. Steering column (1) according to Claim 7, **characterized in that** the sheet-metal plate comprises slots delimiting, with the edges of the sheet-metal plate, metal strips that form the said elastic portions.

9. Steering column (1) according to one of the preceding claims, **characterized in that** the said support base (2) comprises a blocking wall (20; 120) against which the sheet-metal plate (11; 130) is blocked, and **in that** the sheet-metal plate comprises at least one portion forming a metal leaf (15; 115) which bears all or some of the complementary second shapes (15a; 115a, 115b), the metal leaf being arranged in such a way that when the mobile clamping element (10; 110) is some distance away from the sheet-metal plate, the metal leaf is some distance away from the blocking wall, so that if, during clamping, the first blocking shapes (14a; 114a, 114b) come to press on the second blocking shapes (15a; 115a, 115b), this metal leaf (15; 115) moves towards the blocking wall (20; 120), thus placing this metal leaf under elastic strain.

10. Steering column (1) according to one of preceding claims, **characterized in that** the said support base (2) comprises a blocking wall (20) against which the sheet-metal plate (30) is blocked, the said blocking wall comprising studs (21) arranged on either side of this frame, so as to block the sheet-metal plate, so as to contribute to the blocking of the rotation of the steering member (3) with respect to the support base (2) .

11. Steering column (1) according to one of the preceding claims, the said support base (102) comprising a blocking wall (120) on which the sheet-metal plate (130) is blocked, **characterized in that** the sheet-metal plate comprises a load-reacting shape (121), the sheet-metal plate comprising a bow (131) forming a slot (133') in the sheet-metal plate, this load-reacting shape being arranged in this slot (133') in such a way that opposite edges of this load-reacting shape are in contact with corresponding edges of this slot.

12. Steering column (1) according to the preceding claim, **characterized in that** the load-reacting shape is an arch (121) and **in that** the sheet-metal plate (130) comprises a bar (133) extending from one edge of the slot (133') formed by the bow (131), this bar being designed to slide under strain under the said arch (121).

13. Steering column (1) according to one of the preceding claims, the mobile clamping element (110) comprises contact portions (184a, 184b) arranged on each side of the first locking shapes (114a, 114b) and facing the support base (102), these contact portions (184a, 184b) being arranged offset towards the support base with respect to the first locking shapes (114a, 114b) carried by the mobile clamping element, so that, during locking, these contact portions press directly against the support base.
